# EUROPEAN PATENT APPLICATION

(11) **EP 2 259 217 A1**
(43) Date of publication of application: **08.12.2010**
(21) Application number: 09252338.0
(22) Date of filing: 01.10.2009
(51) Int. Cl.: G06Q 30/00, G06Q 10/00

(54) **Generation of travel-related offerings**

(30) Priority: 03.06.2009 US 477733
(71) Applicant: ACCENTURE Global Services GmbH, 8200 Schaffhausen (CH)
(72) Inventor: Drefs, Martin J., Edina Minnesota 55424 (US)
(74) Representative: Fennell, Gareth Charles

(57) **Abstract**

The subject matter of this specification can be embodied in, among other things, a computer-implemented process for providing a travel-related offer for a travel passenger that includes receiving a request for a travel reservation system to initiate a travel reservation for a passenger. The travel reservation system may include passenger name records (PNRs) that each correspond to a passenger and may store reservation information for the passenger. The process may also include transmitting a passenger identifier to a customer feedback module, which may include customer profiles with data related to passengers' satisfaction with past service. The customer feedback module may be used to identify a customer profile associated with the passenger identifier and generate a travel-related offer based on the data related to the passenger's satisfaction with the past service provided to the passenger. The travel-related offer may be presented via an interface.

## Description

### TECHNICAL FIELD

This document relates to presenting travel-related offers by a travel reservation system.

### BACKGROUND

Travel reservation systems may be used by travel service providers to allow customers to purchase, review, or modify their travel arrangements for various travel itineraries. For example, certain airlines allow customers to view different available flight options to and from a certain destination, and to book their travel via a web-based interface. Similarly, some travel reservation aggregators allow customers to book different portions of their travel itineraries via a single interface, rather than the customer having to deal, for example, with separate interfaces for each of a number of airline providers, car rental providers, hotel providers, etc.

Customer relationship management systems are used to track and maintain various facets of a provider's relationship with its current and prospective customers, which may include information that relates to different types of interactions between the provider and a particular customer or groups of customers. Some customer relationship management systems may also include a customer feedback mechanism whereby customers can voice their approval or disapproval of an interaction with the provider so that the provider may then better serve the customer in future interactions.

### SUMMARY

In general, this document describes generating travel-related offers based on data related to a passenger's satisfaction with past service provided to the passenger.

In certain implementations, a computer-implemented process for providing a travel-related offer for a travel passenger may include receiving a request for a travel reservation system to initiate a travel reservation for a passenger. The travel reservation system may include passenger name records (PNRs) that each correspond to a passenger and may store reservation information for the passenger. The process may also include transmitting a passenger identifier to a customer feedback module, which may include customer profiles with data related to passengers' satisfaction with past service. The customer feedback module may be used to identify a customer profile associated with the passenger identifier and generate a travel-related offer based on the data related to the passenger's satisfaction with the past service provided to the passenger. The travel-related offer may be presented via an interface.

In some implementations, the process may also include transmitting the travel reservation information stored in the PNRs to a customer relationship management (CRM) system. The CRM system may have a customer feedback module that includes the customer profiles. In one aspect, the travel reservation information transmitted to the CRM may include a change in passenger recognition level for a passenger enrolled in a loyalty program that rewards passengers based on a type or frequency of travel by the passengers, and the change may be recorded by the CRM system in a customer profile associated with the passenger.

In another aspect, the travel reservation information transmitted to the CRM may include new or modified travel reservations for the passenger specified by the passenger identifier, and the new or modified travel reservations may be recorded by the CRM system in a customer profile identified by the passenger identifier.

In yet another aspect, the travel reservation information transmitted to the CRM may include data identifying previously completed travel for the passenger specified by the passenger identifier, and the data may be recorded by the CRM system in a customer profile identified by the passenger identifier. In some implementations, contact information for the passenger stored in the customer profile may be accessed, and an electronic message relating to recommendations for future travel or ancillary travel may be sent to the passenger.

In some implementations, the process may also include inputting into the customer profile data related to the passenger's satisfaction with the past service based on communication from the passenger to a customer service representative associated with a travel provider that provided the past service.

In some aspects, the customer feedback module's generation of the travel-related offer includes identifying a weight associated with the passenger's satisfaction with the past service, where the weight indicates satisfaction or dissatisfaction with the past service. The travel-related offer may be selected from a group of travel-related offers based on the weight associated with the passenger's satisfaction, and may be for discounted or complimentary travel or travel-related services if the weight indicates dissatisfaction with the past service. The weight associated with the passenger's satisfaction may further indicate an amount of dissatisfaction associated with the past service, and an amount of remuneration associated with the travel-related offer may be selected based on the amount of dissatisfaction.

In some implementations, the customer feedback module's generation of the travel-related offer may include identifying a weight associated with a loyalty recognition level for the passenger and selecting the travel-related offer from a group of travel related offers based on the weight.

The systems and techniques described here may provide one or more of the following advantages. First, travel service revenue (e.g., for flight, train, cruise providers) may be stimulated through email campaign management and automated web flow adjustment of web pages or content within a reservation website. Second, ancillary revenue (e.g., from travel insurance, car rentals, hotel, etc.) may be stimulated through automated email communications and captured advertising revenue from partner suppliers. Third, efficient management of group bookings may be accomplished and customer service functions may be automated for cost savings while maintaining consistent and high-quality service. Fourth, effectiveness of complaint management may be improved while reducing the management cost. Fifth, customers' experience may be enhanced by enabling customer profiles to be supplemented with complete purchase and activity history acquired from a reservation system.

The details of one or more embodiments are set forth in the accompanying drawings and the description below. Other features and advantages will be apparent from the description and drawings, and from the claims.

### DESCRIPTION OF DRAWINGS

FIG. 1 is a diagram of an example system for generating travel-related offers.

FIG. 2 is a flow chart for an example process for generating travel-related offers.

FIG. 3 is a diagram of another example system for generating travel-related offers.

FIG. 4 is a diagram of a system for determining a type and/or amount of a travel-offer to present to a potential passenger.

FIG. 5 is a diagram of a type of a computer system which may implement all or a portion of the described implementations.

Like reference symbols in the various drawings indicate like elements.

### DETAILED DESCRIPTION

In one aspect, this document describes a system for integrating a travel reservation system with a customer relationship management (CRM) system. In some implementations, travel-related information typically stored in passenger name records (PNRs) can be transmitted to a CRM system for enhancement of customer profiles. In some instances, events that occur at the reservation system are recognized by the CRM system, which can use customer profiles enhanced with PNR information to launch a variety of customized workflows. For example, a workflow may be initiated where a reservation website for a travel reservation system is customized for a particular user that has a customer profile. One such customization may include presenting travel-related offers to passengers (or their agents) based on the passenger's previous feedback about past travel services.

For instance, a passenger may have previously entered a complaint because of a delayed or cancelled airline flight. An airline agent may have entered the complaint into a customer relationship management (CRM) system. The next time the passenger logs onto the airline's website to make travel reservations, the passenger is identified and his profile is queried to determine if he had positive or negative feedback about past travel services.

If the feedback was negative, the passenger can be presented with a travel-related offer such as a voucher for complimentary drinks or discounted travel for the current travel reservations. Presenting an offer at a time when a reservation process is occurring (instead of at the time of the complaint) may encourage the redemption of the offer, and consequently, engender goodwill toward the airline. If the feedback is positive, the passenger can be presented with travel-related offers that are similar or related to previously completed travel.

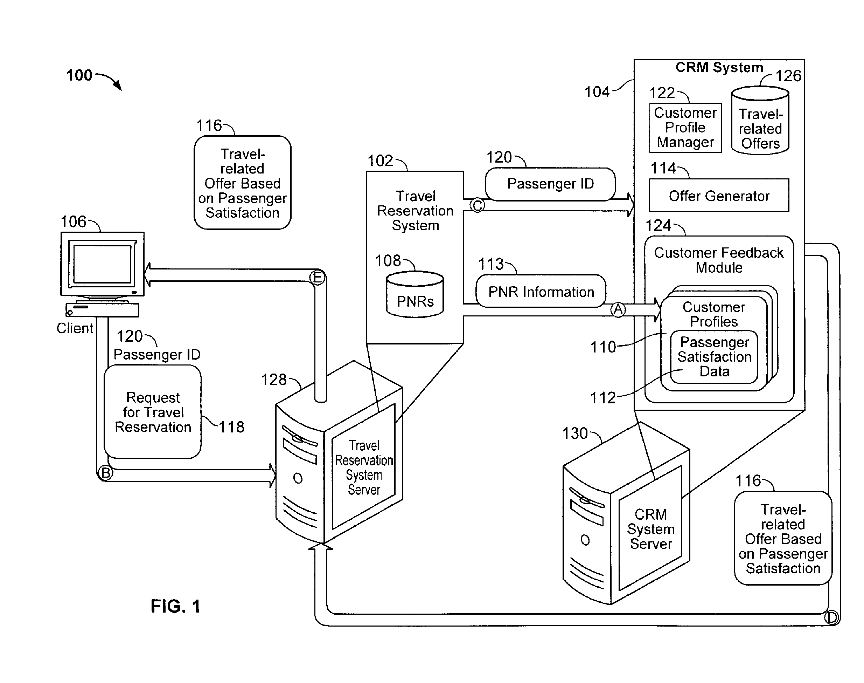

FIG. 1 is a diagram of an example system 100 for generating travel-related offers. The system 100 can include a travel reservation system 102, a CRM system 104, and a client 106, which logs onto an interface of the travel reservation system 102 to make a travel reservation. The travel reservation system 102 (e.g., an airline reservation system) can include PNRs that hold travel-related information (e.g., reservations, passenger preferences, fares, etc.) that is transmitted to the CRM system 104.

The CRM system 104 may include customer profiles 110 that store information such as contact information, demographic data, passenger satisfaction data 112, etc. The CRM system 104 can use the travel-related information (e.g., PNR information 113) transmitted from the travel reservation system 102 to supplement the customer profiles 110.

Transmission or synchronization of the information 113 in the PNRs and the customer profiles may occur, for example, periodically or based on events (e.g., a modification of a PNR). This transmission is indicated by an arrow labeled "A." In one implementation, the CRM system 104 may include an offer generator 114 that generates a travel-related offer 116 based on passenger satisfaction data 112. The offer 116 may be presented to the passenger (or the passenger's agent) when the passenger logs into the travel reservation system 102 to make the travel reservation.

For example, a user of the client 102 may view a website for the travel reservation system 102. Using the website, the user may initiate a request for a travel reservation 118 as indicated by an arrow "B." In some implementations, the user may have an identifier (e.g., a browser cookie) stored on the client 106, which indicates the user's identity. The travel reservation system may use the cookie to determine a passenger previously associated with the client 102. Alternatively, the user may enter an identifier (e.g., a log-in name and/or password) into the website of the travel reservation system. The travel reservation system may use the identifier as a passenger identifier 120 or may use the identifier to generate the passenger identifier 120.

The travel reservation system may transmit the passenger identifier 120 to the CRM system 104 as indicated by an arrow labeled "C." The CRM system 104 may include a customer profile manager 122 that uses the passenger identifier 120 to determine which customer profile belongs to the passenger specified by the passenger identifier 120. The customer profiles may be stored by a customer feedback module 124. The customer feedback module 124 may access the passenger satisfaction data 112 within the customer profile associated with the passenger identifier and transmit it to the offer generator 114.

In some implementations, the offer generator 114 can determine whether the satisfaction data 112 indicates that the passenger was dissatisfied with a past travel service. If the passenger was dissatisfied, the offer generator may generate the travel-related offer 116 and transmit it to the travel reservation system as indicated by an arrow labeled "D." For example, the offer generator may select a travel-related offer from among multiple possible offers stored in a travel-related offer database 126. The offer generator 114 may select a different type of offer based on several factors including, for example, how dissatisfied the passenger was with the past service or a loyalty recognition level of the passenger (e.g., gold-level frequent flier). The offer generator may integrate the offer into content (e.g., HTML) that is transmitted to the travel reservation system 102.

The travel reservation system 102 may modify a web page for presentation to the client 106 so that the web page includes the offer 116 transmitted from the CRM system. The modified web page may then be transmitted to the client 106 as indicated by an arrow labeled "E."

The arrows in FIG. 1 are labeled alphabetically to indicate one example sequence of events; however, events may occur in a different sequence, some events may not occur at all, or other events not shown may occur. For example, the transmission of PNR information indicated by the arrow "A" may occur after the request for the travel reservation indicated by the arrow "B." The request for the travel reservation may modify a PNR, which triggers a transmission of some or all of the PNR information 113 to the CRM system 104.

The travel reservation system 102 and the CRM system 104 are depicted as hosted on separate servers 128, 130 for illustrative purposes, but these system could be hosted by the same server or executed on multiple servers. Also, although the customer feedback module 124 is depicted as associated with the CRM system 104, the feedback module 124 may be integrated with the travel reservation system 102, or hosted by a separate system not shown in FIG. 1. If the feedback module 124 is not hosted by the travel reservation system, the travel-related information can be transmitted to the feedback module instead of (or in addition to) transmitting the information to the CRM system 104. The feedback module 124 can then integrate the information into the customer profiles 110.

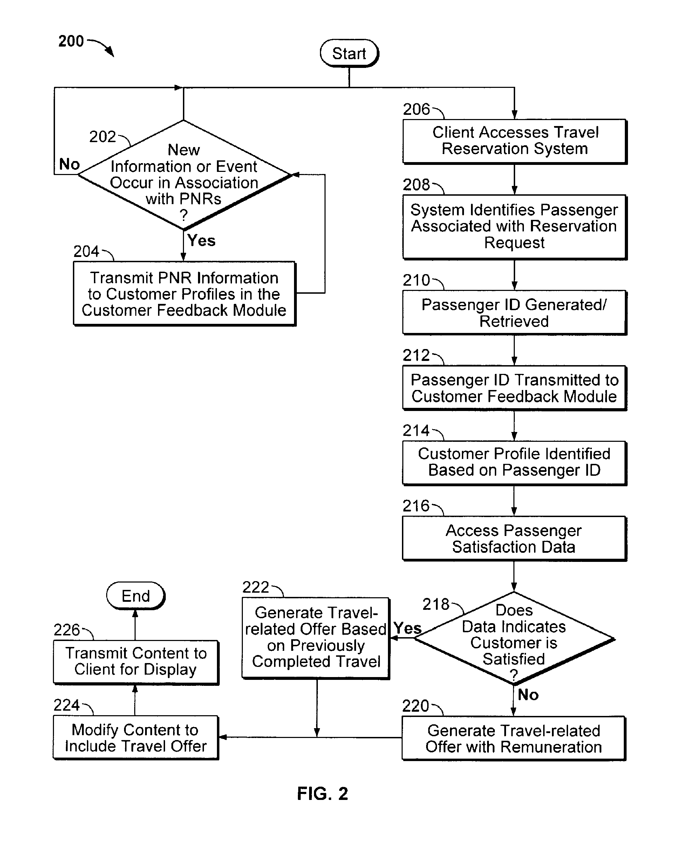

FIG. 2 is a flow chart for an example process 200 for generating travel-related offers. The process 200 may be performed, for example, by a system such as the previously described system 100 or the subsequently described system 300; however, for clarity of presentation, the description that follows uses the system 100 as the basis of an example for describing the process 200. However, another system, or combination of systems, may be used to perform the process 200.

In block 202 of the process 200, a determination is made whether information in a PNR is modified or if another PNR-related event occurs. If it is determined that a PNR-related event occurs, the process may proceed to block 204. For example, the travel reservation system 102 may receive a schedule change for a passenger due to a delayed flight. The reservation system 102 can access PNRs for passengers currently assigned to the delayed flight and modify the anticipated departure time. After the detection of the PNR modification, process 200 proceeds to block 204. If no such event is detected, the process 200 may repeat the block 202 and continue to wait for a PNR-related event.

In block 204, PNR information is transmitted to customer profiles. For example, information from the PNRs which were modified with the delayed departure time may be transmitted to the customer feedback module 124 for inclusion in the customer profiles 112. After block 204, the process 200 may return to the block 202 and continue to monitor for additional PNR-related events.

In some implementations, other actions may be performed in parallel with the actions described in association with blocks 202 and 204. For example, actions of blocks 206-226 may be performed during a time period that substantially overlaps with the actions of blocks 202, 204.

In block 206, a client may access a travel reservation system. For example, a travel agent may operate a terminal that interfaces with the travel reservation system 102. Alternatively, a potential passenger may use a browser to navigate to a reservation website of the travel reservation system 102.

In block 208, a passenger associated with a reservation request is identified. For example, the travel agent may type in a passenger name into the terminal. The passenger name is then transmitted to the travel reservation system 102, which correlates the passenger name with a passenger that has previously requested travel reservations. Alternatively, if the potential passenger is directly accessing the travel reservation system's website, a cookie stored on the client may be used by a web server at the travel reservation system to identify a passenger previously associated with the cookie (e.g., the cookie may have been transmitted by the web server to the client 106 during a previous session when a travel reservation for the passenger was made).

In block 210, a passenger ID is generated or retrieved. For example, the passenger's name may be previously associated with a passenger ID that specifies that passenger. This ID may be retrieved by the travel reservation system 102 from for example, the passenger's PNR. In block 212, the passenger ID is transmitted to the customer feedback module.

In block 214, a customer profile associated with the passenger specified by the passenger ID may be identified. For example, the customer feedback module 124 may user the passenger ID 120 as a key to identify a customer profile associated with the ID 120. In another implementation, the ID 120 may be transmitted to a customer profile manager 112 within the CRM system 104. The profile manager 112 may use the ID to locate a customer profile for the passenger specified by the ID 120.

In block 216, passenger satisfaction data may be accessed. For example, the customer profile may include information reported by the passenger that indicates his or her satisfaction with a previously rendered travel service. The passenger may have contacted an agent for a travel provider that rendered the service to submit a complaint. The agent may have then entered the complaint into the customer profile.

Alternatively (or in addition), the passenger satisfaction data may be inferred based on travel-related information used to update the customer's profile. For example, a passenger may have reserved a Friday airline flight out of Minneapolis, Minnesota, but all Friday flights were cancelled due to a winter blizzard. The next available flight may not leave until Saturday. Both the original reservation for the Friday flight and a rescheduled flight for Saturday may be recorded in the passenger's PNR. This information may then be transmitted for inclusion in the customer's profile stored in the CRM system 104. In this example, the customer feedback module 124 may execute an algorithm that infers a satisfaction score, or weight, based on the length of the delayed flight and on the fact that the reschedule flight was not initiated by the passenger.

In block 218, a determination is made whether the satisfaction data indicates that a passenger is satisfied. For example, the customer feedback module 124 may access a weight associated with the satisfaction data to determine if the passenger was satisfied. Alternatively, a binary variable may be associated with the satisfaction data, where a first value indicates satisfaction (or neutrality) and a second value indicates dissatisfaction. In the case of the passenger who had the cancelled Friday flight, his satisfaction data indicates that the passenger is likely to be dissatisfied with the travel service provided. If there is dissatisfaction, an action of block 220 is performed. If there is satisfaction (or lack of dissatisfaction), an action of block 222 is performed.

In block 220, a travel-related offer with remuneration is generated. For example, the offer generator 114 may select an offer from the database of travel-related offers 126. Because the passenger indicated a dissatisfaction with previous travel services, an offer with remuneration, such as discounted travel or complementary services (such as free beverages or meals) may be selected.

If the passenger is satisfied, block 222 is performed, in which an offer is generated based on previously completed travel. For example, if the passenger was satisfied (or neutral) with the previous travel service, it may indicate that the passenger is interested in travel options that are similar to the past travel completed. For instance, if the passenger previously booked a particular hotel when flying into Minneapolis, the same hotel chain may be advertised as a travel option to the passenger who is booking a flight to Austin, Texas. In some implementations, the block 222 may be performed in addition to or instead of the block 220. After either blocks 220, 222, an action of block 224 may be performed.

In block 224, content is modified to include the travel-related offer. Information related to the selected or generated travel-related offer may include images, audio, and/or text which can be formatted, for example, in HTML, JavaScript, and/or SWF files. The offer generator 114 may perform the formatting or it may be performed, for example, at the travel reservation system. In some implementations, existing content such as web pages of the travel reservation system's website may be modified to include the content.

In block 226, the content is transmitted to the client for display. For example, a web server at the travel reservation system 102 may transmit a web page that has been modified to include the travel offer to a browser executed by the client 106. After this, the process 200 may end.

While in the example process 200, blocks 202, 204 describe an event-driven process to prompt the transmission of travel-related data from the travel reservation system to the CRM system, in other implementations, the synchronization or transmission of such data may also be periodically transmitted based on a schedule (e.g., a batch-type transmission).

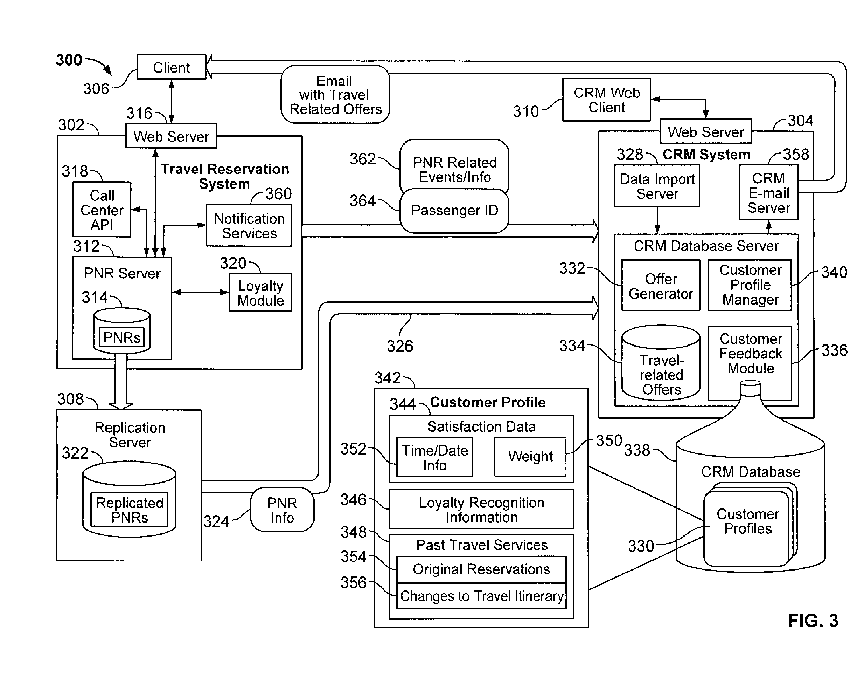

FIG. 3 is a diagram of another example system 300 for, among other things, generating travel-related offers. Like the system 100 of FIG. 1, the system 300 may also have a travel reservation system 302, a CRM system 304, and a client 306 that communicates with the reservation system 302. The system 300 also shows a replication server 308, which may duplicate travel-related data stored at the reservation system 302 for later transmission to the CRM system 304. Additionally, the CRM system 304 may have clients, such as the CRM web client, 310 which log on to an interface of the CRM system 304.

The reservation system 302 may include a PNR server 312 which manages a PNR database 314 and serves requests for data in the database 314. For example, the reservation system may also include a web server 316 that receives requests for reservations via a website accessed by the client 306. Information about the requested information (e.g., date, time, departure/arrival cities, travel provider, etc.) can be transmitted from the web server 316 to the PNR server 312 for storage in the PNR database 314 under a passenger name record for the user that is requesting the travel service.

Similarly, the reservation system 302 may include a call center API 318 that interfaces with clients at a call center (not shown). Travel agents may make reservations on behalf of passengers, and the reservation information may be transmitted to the PNR server 312 via the call center API 318.

Internal components of the reservation system 302 may also access the PNR server 312. For example, the reservation system 302 may include a loyalty module 320 that manages a travel loyalty program, which rewards travelers based on a frequency and/or type of travel completed by a traveler. In some implementations, the loyalty module 320 can access information stored in the PNR database 314, such as an amount of miles traveled by a passenger during a time period. The loyalty module 320 can use the information to calculate a passenger or loyalty recognition level for the passenger. For example, if the passenger has flown 60,000 miles on airline flights, the passenger may earn a "gold" recognition level, which enables the passenger to obtain certain discounted or complementary services (e.g., free drinks or use of an airline lounge). The loyalty module 320 may periodically perform queries (or receive information based on PNR-related events) in order to update a passenger's recognition level. After a series of trips over three months, the loyalty module may determine that the "gold" recognition level passenger has earned additional miles which boost the passenger to a "platinum" status, which garners the passenger additional privileges from the airline such as automatic class bumps from economy to first class. In some implementations, data determined by the loyalty module 320, such as the recognition level and its associated privileges, may be transferred to the PNR server 312 for insertion in the passenger's PNR.

In some instances, information from the PNR database 314 may be periodically replicated using the replication server 308 and stored in a replicated PNR database 322. In turn, this replicated PNR information 324 may be transmitted to the CRM system 304 on a batch or event-driven basis (see arrow 326).

The CRM system 304 may include a data import server 328 that receives the PNR information 324 and extracts and/or processes (e.g., formats) the information for later insertion into customer profiles 330. The CRM system 304 may also include a CRM database server that manages, for example, an offer generator 332 that generates travel-related offers based on information retrieved from a travel-related offer database 334; a customer feedback module 336 that includes a CRM database 338, which can store the customer profiles 330; and a customer profile manager 340 that may correlate passenger information from the reservation system 302 with a corresponding customer so that the passenger information may be inserted in the customer's profile.

Each customer profile may include several types of customer information. For example, customer profile 342 includes satisfaction data 344, loyalty recognition information 346, and data about past travel services 348.

The satisfaction data 344 indicates whether a passenger was (or is likely to have been) satisfied or dissatisfied with a past travel service. A weight 350 may indicate an amount of satisfaction or dissatisfaction of the passenger. If the passenger expressed extreme dissatisfaction with a past service, this complaint may be recorded by an agent for the travel provider and inserted into the customer's profile. The agent may select a rating to associate with the complaint (e.g., extremely dissatisfied = 2, somewhat dissatisfied = 1, neutral = 0, somewhat satisfied = -1, very satisfied = -2). Alternatively, this ranking may be determined by the CRM system based on the past service which prompted the complaint. For example, if the agent entered that the complaint was prompted by a delayed flight rather than a cancelled flight, the weight may represent a less dissatisfied state than if the flight was cancelled. Additionally, in some implementations, this weight may be calculated automatically based on information received from the reservation system regardless of (or in addition to) whether a customer explicitly registers a complaint about past service. In some implementations, the weight may be used later in the determination of a type of travel-related offer to present to the user.

The satisfaction data 344 may also include time/date information 352. This information 352 may indicate when a particular past service occurred. The occurrence of the past service associated with the satisfaction data 344 may impact the determination of a type of travel-related offer. For example, if a passenger is associated with very negative satisfaction data, but the past service occurred several years before the passenger's most recent attempt to make travel reservations, the passenger may be presented with a travel-related offer that involves less remuneration than if the past service occurred recently.

The loyalty recognition information 346 may record the customer's current recognition level based on the current PNR information transmitted from the reservation system 302. Having this information automatically updated in the customer profile 342 may eliminate the need for manually updating the profile 342 or reduce the amount of time that the recognition level is outdated. The recognition level may be used to assign the passenger to a different level of customer service agent when, for example, the customer contacts the travel service provider.

The past travel services 348 included in the customer profile 348 may record travel information such as original reservations 354 and changes to the travel itinerary 356. The past travel services 348 may be used to select travel-related offers for presentation to a user. For example, if a user has previously scheduled an annual trip to Hawaii in January, the offer generator 332 may generate content to include in an email that reminds that user that January is two months away and highlights certain flights and/or hotels in Hawaii. The offer generator 332 can transmit the content to a CRM e-mail server 358, which creates and sends an email with the content to the passenger. The email server 358 (or offer generator 332) may, for example, access the passenger's email contact information (not shown) from the passenger's customer profile 342.

In addition, in some implementations, the changes to the travel itinerary 356 may indicate whether the changes were initiated by the passenger or not. If the changes were not initiated by the passenger, all or some of the satisfaction data 344 may be derived from the changes to travel 356. For example, if a flight is delayed because of mechanical problems, this change can be recorded as non-passenger initiated change. The customer feedback module 336 may calculate the weight 350 based on the length of the delay, where a longer delay is correlated to greater dissatisfaction.

In some versions, the travel reservation system 302 can include notification services 360 running on a notification module. The notification services 360 may send notification messages to the CRM system 304, which can then retrieve information 362 associated with the messages. For example, a message may initiate the retrieval of PNR information from the replication server 308 or directly from the PNR server 312. In some instances, the notification messages may also include PNR-related information such as data about new bookings, flown flights, schedule changes, group bookings, customer registrations, agency registrations, corporate travel activity, and/or loyalty events. Alternatively, the messages may only notify the CRM system 304 of such events so that the CRM system 304 may retrieve the associated information.

A system such as the system 300 may be used to accomplish several task, such as (but not limited to) stimulating travel service (e.g., flight, train, cruise) revenue, stimulating ancillary (e.g., travel insurance, car rentals, hotel, etc. ) revenue, efficiently managing group bookings, automating customer service functions for cost savings while maintaining consistent and high-quality service, improving effectiveness of complaint management while reducing the management cost, and enhancing the customers' experience.

For example, travel service revenue may be stimulated by using the CRM system 304 to generate email campaigns that are targeted to a customer's past travel. As previously described, the CRM system 304 may access customer profiles that include email contact information as well as information about past travel services that was imported from the reservation system 302. Similarly, revenue may be stimulated by automatically adjusting a web flow of a reservation website based on previous booking activity. For example, when the client 306 accesses a website of the reservation system 302, the reservation system can identify a passenger associated with the client (e.g., using cookies or log-in IDs) and pass a passenger ID 364 to the CRM system, which can access information about the past bookings for the passenger and generate a travel-related offer for the passenger. This can then be passed back to the reservation system, which may insert the offer in a webpage that is presented to the user. Additionally, the reservation system may be able to adjust the sequence of the web pages (or content within the web pages) to eliminate portions of the web flow. For example, if the user has never requested travel insurance, this portion of the web flow may be eliminated from the reservation process accomplished through the website. Alternatively, the travel insurance option may be highlighted at the beginning of the web flow with additional information included detailing the benefits of travel insurance.

Ancillary revenue may be stimulated, for example, by generating automated email communications to promote targeted ancillary services that the customer has not already booked but are available for purchase from the reservation system's website or from third parties. Targeted advertising for the third parties may permit the entity associated with the reservation system to capture advertising revenue and/or marketing money from partner suppliers for promoting their brand to targeted customers.

Group booking management may be facilitated by, for example, automating a workflow for group bookings. The workflow may include sending (e.g., via email) payment reminders, name list reminders, and other events requiring attention from the group leader or reservation system personnel.

Customer service functions may be enhanced by, for example, automating customer service functions and customizing email communications based on events or attributes of PNRs. Similarly, an automated workflow system for complaint management may be integrated with the customer data in the CRM. This may eliminate the need for a separate complaint management system.

The customers' experience in making reservations may be improved by, for example, enhancing the customer profiles with complete purchase and activity history from the PNRs (including creating enhanced profiles for users that may not be registered with the CRM system, but have made reservations through the reservation system). Additionally, a user's experience with the website may be improved by permitting mass-customization tailoring of the web experience based on the customer profile and/or booking attributes from the customer's associated PNR.

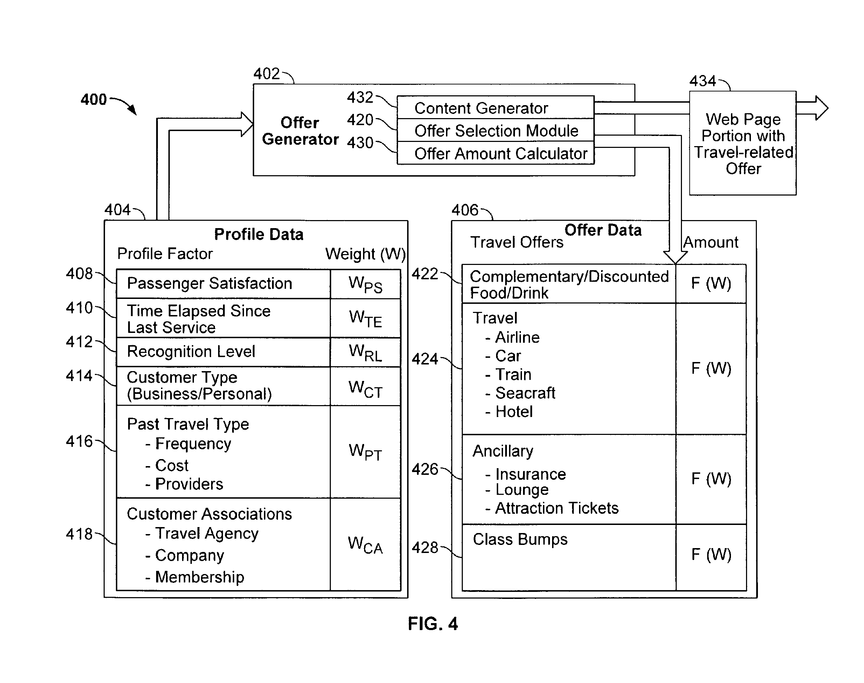

FIG. 4 is a diagram of a system 400 for determining a type and/or amount of a travel-offer to present to a potential passenger. The system 400 includes an offer generator 402, profile data 404, and offer data 406. The offer generator 402 can use the profile data 404 from a customer profile and the offer data 406 to generate and/or select offer content to include in an offer that is presented to a potential passenger. The profile data 404 may include several variables that affect the offer produced by the offer generator 402. For example, the profile data may include variables such as passenger satisfaction 408, time elapsed since last travel service completed 410, passenger recognition level 412, customer type (e.g., business or personal traveler) 414, past travel type (which may include or be composed of several sub-variables such as frequency of travel, cost of travel service, provider of travel service, etc.) 416, and customer associations with other entities (which may also include sub-variables such as travel agency used to book the travel, company with which the passenger is associated, whether the passenger is a member of an organization such as AAA, etc.) 418.

Each of the variables may be represented by a weight that represents how heavily the variable should be emphasized in an offer calculation. For example, a customer with a higher recognition level may be offered travel with a greater discount than customers with a lower recognition level.

In some implementations, the offer generator may access the profile data 404 and select a particular offer using an offer selection module. For example, different offers may be selected based on a variable or a combination of variables from the profile data 404. If, for instance, the combined variable weights indicate great dissatisfaction with a past service that occurred recently for an expensive travel service, a free travel service may be selected over a merely discounted travel service.

Some of the travel offers that may be included in the offer data are complementary or discounted food and drink 422, direct offers by travel providers (e.g., airline, car, train, sea craft, hotel providers, etc.) 424, offers for ancillary travel-services (e.g., travel insurance, use of an airline lounge, attraction tickets, etc.) 426, and class bumps 428. Each of the offer types may be associated with an amount of a discount for the service provided to the passenger. An offer amount calculator 430 may use one or more of the weights from the profile data 404 to calculate the amount. For example, passengers associated with a certain company or organization may receive a higher discount for an airline flight than passengers that are not.

A content generator 432 within the offer generator 402 may use the selected offer type and/or calculated amount to generate and/or select content for a travel-related offer. For example, the offer generator can create a portion 434 of HTML code that lists the offer type and amount. The generator 432 may also access additional text, images, video, or audio associated with the offer type for inclusion in the portion 434. This additional media may be stored, for example, in the travel-related offer database 126. The offer generator 402 may then forward the portion 434 to the reservation system for inclusion in a web page presented to a user attempting to reserve travel.

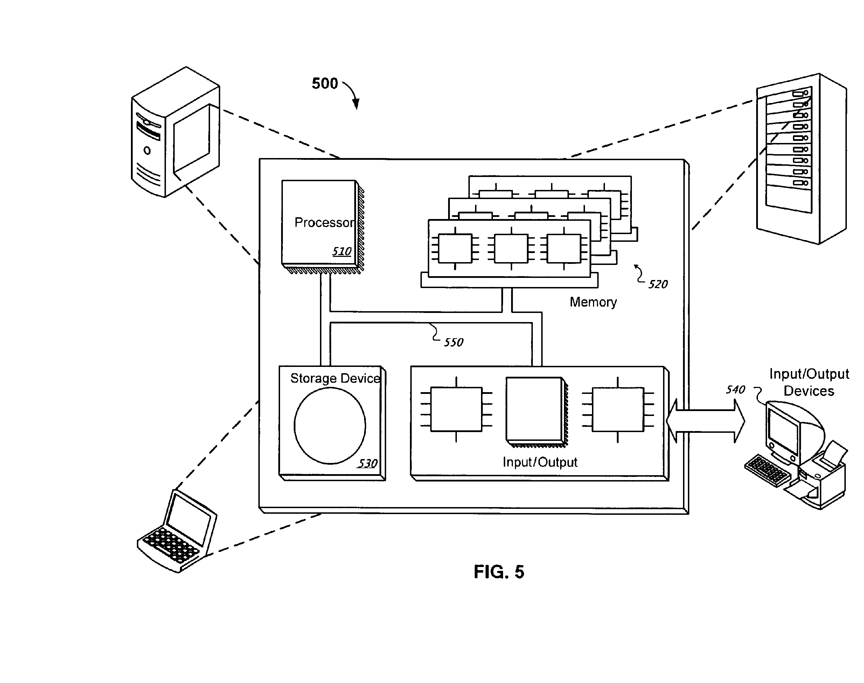

FIG. 5 is a schematic diagram of a computer system 500. The system 500 can be used for the operations described in association with any of the computer-implement processes described previously, according to one implementation. The system 500 is intended to include various forms of digital computers, such as laptops, desktops, workstations, personal digital assistants, servers, blade servers, mainframes, and other appropriate computers. The system 500 can also include mobile devices, such as personal digital assistants, cellular telephones, smartphones, and other similar computing devices. Additionally the system can include portable storage media, such as, Universal Serial Bus (USB) flash drives. For example, the USB flash drives may store operating systems and other applications. The USB flash drives can include input/output components, such as a wireless transmitter or USB connector that may be inserted into a USB port of another computing device.

The system 500 includes a processor 510, a memory 520, a storage device 530, and an input/output device 540. Each of the components 510, 520, 530, and 540 are interconnected using a system bus 550. The processor 510 is capable of processing instructions for execution within the system 500. The processor may be designed using any of a number of architectures. For example, the processor 510 may be a CISC (Complex Instruction Set Computers) processor, a RISC (Reduced Instruction Set Computer) processor, or a MISC (Minimal Instruction Set Computer) processor.

In one implementation, the processor 510 is a single-threaded processor. In another implementation, the processor 510 is a multi-threaded processor. The processor 510 is capable of processing instructions stored in the memory 520 or on the storage device 530 to display graphical information for a user interface on the input/output device 540.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 may be a floppy disk device, a hard disk device, an optical disk device, or a tape device.

The input/output device 540 provides input/output operations for the system 500. In one implementation, the input/output device 540 includes a keyboard and/or pointing device. In another implementation, the input/output device 540 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device for execution by a programmable processor; and process steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include a local area network ("LAN"), a wide area network ("WAN"), peer-to-peer networks (having ad-hoc or static members), grid computing infrastructures, and the Internet.

The computer system can include clients and servers. A client and server are generally remote from each other and typically interact through a network, such as the described one. The relationship of client and server arises by virtue of computer programs running on the respective computers and having a client-server relationship to each other.

Although a few implementations have been described in detail above, other modifications are possible. For example, different types of electronic messages may be used in addition to, or in the place of, the email communications described above. These different types of electronic messages may include, for example, SMS or other text messaging services and/or other types of electronic communications, such as text-based, audio, video, and/or multimedia electronic messages. In addition, travel-related offers may be based on customer profiles other than the profile for the customer making the reservation. For example, past travel histories from other customers similar (e.g., demographically similar or based on similar travel patterns or travel services purchased) to the customer may be used to recommend travel services to the customer. In one example, a customer from a northern climate may be offered a flight to a particular location in a southern climate based on recent purchases by other customers who reside in areas near the customer.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

## Claims

1. A computer-implemented process for providing a travel-related offer for a travel passenger, comprising:
receiving from an interface of a travel reservation system a request for the travel reservation system to initiate a travel reservation for a passenger, the travel reservation system comprising passenger name records (PNRs) that each correspond to a passenger and store reservation information for the passenger;
transmitting from the travel reservation system a passenger identifier specifying the passenger to a customer feedback module comprising customer profiles which include data related to passengers' satisfaction with past service, wherein the customer feedback module is configured to identify a customer profile associated with the passenger identifier and generate a travel-related offer based on the data related to the passenger's satisfaction with the past service provided to the passenger; and
presenting on the interface the generated travel-related offer.

2. The process of claim 1, further comprising transmitting the travel reservation information stored in the PNRs to a customer relationship management (CRM) system.

3. The process of claim 2, wherein the CRM system comprises the customer feedback module that includes the customer profiles.

4. The process of claim 3,
further comprising modifying the customer profiles to include the transmitted travel reservation information stored in the PNRs; or
wherein the travel reservation information transmitted to the CRM comprises a change in passenger recognition level for a passenger enrolled in a loyalty program that rewards passengers based on a type or frequency of travel by the passengers, the change being recorded by the CRM system in a customer profile associated with the passenger.

5. The process of claim 3,
wherein the travel reservation information transmitted to the CRM comprises new or modified travel reservations for the passenger specified by the passenger identifier, the new or modified travel reservations being recorded by the CRM system in a customer profile identified by the passenger identifier; and optionally
further comprising accessing contact information for the passenger stored in the customer profile and transmitting to the passenger using the contact information an electronic message that relates to the new or modified travel reservations.

6. The process of claim 3,
wherein the travel reservation information transmitted to the CRM comprises data identifying previously completed travel for the passenger specified by the passenger identifier, the data being recorded by the CRM system in a customer profile identified by the passenger identifier; and optionally
further comprising accessing contact information for the passenger stored in the customer profile and transmitting to the passenger using the contact information an electronic message that relates to recommendations for future travel or ancillary travel services based on the data identifying the previously completed travel.

7. The process of claim 3,
further comprising inferring the passenger's satisfaction with the past service based on a comparison of travel reservation information transmitted to the CRM comprising the passenger's travel reservation for travel and travel schedule changes to the travel that were not initiated by the passenger; and optionally
wherein travel schedule changes to the travel comprise delays or cancellation in travel transportation, or
further comprising associating a weight with the inferred passenger's satisfaction based on an amount of difference between the passenger's travel reservation and the travel schedule changes.

8. The process of claim 1, further comprising inputting into the customer profile data related to the passenger's satisfaction with the past service based on communication from the passenger to a customer service representative associated with a travel provider that provided the past service.

9. The process of claim 1, wherein the customer feedback module's generation of the travel-related offer comprises identifying a weight associated with the passenger's satisfaction with the past service, wherein the weight indicates satisfaction or dissatisfaction with the past service.

10. The process of claim 9, wherein the travel-related offer is selected from a group of travel-related offers based on the weight associated with the passenger's satisfaction.

11. The process of claim 10,
wherein the travel-related offer is for discounted or complimentary travel or travel-related services if the weight indicates dissatisfaction with the past service; and optionally
wherein the weight associated with the passenger's satisfaction further indicates an amount of dissatisfaction associated with the past service, and wherein an amount of remuneration associated with the travel-related offer is selected based on the amount of dissatisfaction.

12. The process of claim 10, wherein the travel-related offer is for similar travel or travel-related services if the weight indicates satisfaction with the past service.

13. The process of claim 1,
wherein the customer feedback module's generation of the travel-related offer comprises identifying a weight associated with a loyalty recognition level for the passenger and selecting the travel-related offer from a group of travel related offers based on the weight ;or
wherein presenting on the interface the generated travel-related offer comprises modifying content or sequence of one or more web pages to present the offer and outputting the one or more web pages for display on a browser.

14. A computer program product tangibly embodied in a computer readable storage device, the computer program product including instructions that, when executed, perform operations for generating travel-related offers for a travel passenger, the operations comprising:
receiving from an interface of a travel reservation system a request for the travel reservation system to initiate a travel reservation for a passenger, the travel reservation system comprising passenger name records (PNRs) that each correspond to a passenger and store reservation information for the passenger;
transmitting from the travel reservation system a passenger identifier specifying the passenger to a customer feedback module comprising customer profiles which include data related to passengers' satisfaction with past service, wherein the customer feedback module is configured to identify a customer profile associated with the passenger identifier and generate a travel-related offer based on the data related to the passenger's satisfaction with the past service provided to the passenger; and
presenting on the interface the generated travel-related offer.

15. A system for providing a travel-related offer for a travel passenger, comprising:
one or more computers having an interface for a travel reservation system to accept a request for the travel reservation system to initiate a travel reservation for a passenger, the travel reservation system comprising passenger name records (PNRs) that each correspond to a passenger and store reservation information for the passenger;
a notification service module to transmit from the travel reservation system a passenger identifier specifying the passenger to a customer feedback module comprising customer profiles which include data related to passengers' satisfaction with past service, wherein the customer feedback module is configured to identify a customer profile associated with the passenger identifier and generate a travel-related offer based on the data related to the passenger's satisfaction with the past service provided to the passenger; and
a content generator to modify content of the interface of the travel reservation system to present the travel-related offer.
